# EUROPEAN PATENT SPECIFICATION

(11) **EP 1 856 187 B1**
(45) Date of publication and mention of the grant of the patent: **22.01.2014**
(21) Application number: 06737510.5
(22) Date of filing: 07.03.2006
(51) Int. Cl.: C08G 73/02, C08G 65/325, C08G 12/06, C09D 161/22, C09D 179/02

(54) **POLYMER COATED BRIDGING SOLIDS AND WEIGHTING AGENTS FOR USE IN DRILLING FLUIDS**
POLYMERBESCHICHTETE ÜBERBRÜCKUNGSFESTSTOFFE UND GEWICHTUNGSMITTEL ZUR VERWENDUNG FÜR BOHRFLÜSSIGKEITEN
SOLIDES DE LIAISON REVETUS DE POLYMERE ET AGENTS PONDEREUX POUR FLUIDES DE FORAGE

(30) Priority: 07.03.2005 US 659257 P
(43) Date of publication of application: 21.11.2007
(73) Proprietor: M-I L.L.C., Houston, TX 77072 (US)
(72) Inventor: BALLARD, David, Kincardineshire, Scotland AB39 2PQ (GB)
(74) Representative: Gill, Stephen Charles
(86) International application number: PCT/US2006/008343
(87) International publication number: WO 2006/096798

(56) References cited:
- WO-A1-00/06664
- US-A- 4 652 606
- US-A- 4 921 621
- US-A- 5 851 959
- US-A1- 2003 148 892
- RICHARDSON J L ET AL: "Influence of in situ two-phase polymers on aggregate stabilization in various textured North Dakota soils", CANADIAN JOURNAL OF SOIL SCIENCE, OTTAWA, CA, vol. 67, no. 1, 1 February 1987 (1987-02-01), pages 209-213, XP002643141, ISSN: 0008-4271

## Description

### BACKGROUND OF INVENTION

Rotary drilling methods employing a drill bit and drill stems have long been used to drill well bores in subterranean formations. Drilling fluids or muds are commonly circulated in the well during such drilling to cool and lubricate the drilling apparatus, lift drilling cuttings out of the wellbore, and counterbalance the subterranean formation pressure encountered. When penetrating a porous formation, such as an unconsolidated sand, it is well known that large amounts of fluid may be pushed by pressure into the formation. This reduction in the amount of circulating fluid is commonly know as a fluid loss.

One of skill in the art will know that a wide variety of materials including, natural and synthetic materials have been proposed and used to prevent fluid loss. In some instances these materials serve dual roles such as bridging or weighing agents in the well bore fluid. These fluid loss materials are incorporated into the filter cake that is formed throughout the drilling process. The problem is that removal of the filter cake from certain formations, especially when the well is brought into production can be problematic and may result in irreparably damaging the formation. Thus there exists a continuing need for improved methods and materials that may be used to control fluid loss.

### SUMMARY

A wellbore fluid having at least two phases, including a fluid phase and a solid phase. The solid phase is a powdered solid material coated with a polymer that is the reaction product of a polyether amine and a dialdehyde crosslinking agent. Preferably the polyether amine is a diamine and more preferably the compound acts as a shale hydration inhibitor. The dialdehyde crosslinking agent reacts with the polyether amine compound and forms the polymeric material coating the solid. The polymer is substantially solubilized when the pH of the fluid has a value of less than about 7. Other components that may or may not be included in the fluid loss control fluid include weighting agents, viscosifying agents, and other common wellbore fluid components that should be well known to one of skill in the art.

The polyether amine in one preferred and illustrative embodiment has the formula: 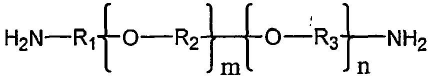 in which R₁, R₂ and R₃ are independently selectable C₂ to C₄ carbon containing branched or straight chain aliphatic groups, and m+n has a value in the range from about 1 to about 50. Alternatively, the polyether amine may or may not be selected from the group consisting of: a) compounds having the general formula: 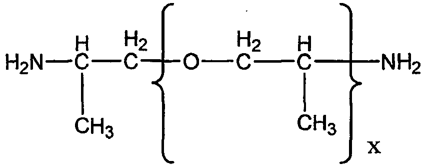 in which x has a value from about 1 to about 50; b) compounds having the general formula: 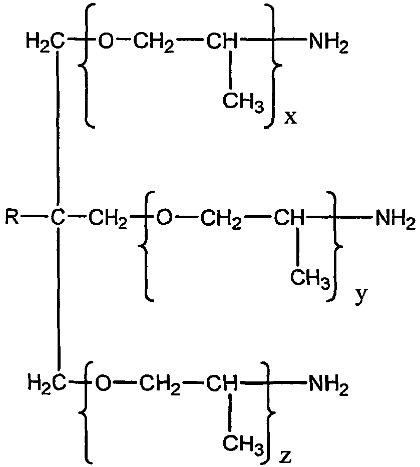 in which R may be a H or C1 to C6 carbon group, and x+y+z has a value from 3 to about 25; and c) compounds having the general formula: 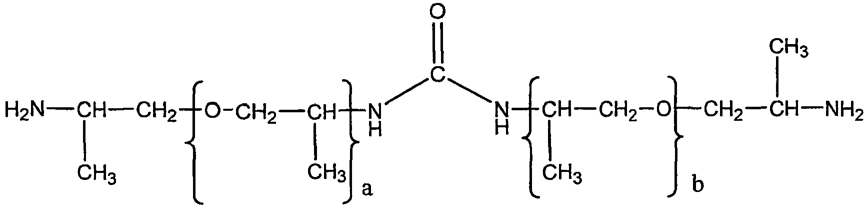 in which a +b is a number greater than 2; and combinations of these and other similar compounds that should be well know to one of skill in the art.

The dialdehyde crosslinking agent may or may not be selected from the group consisting of formaldehyde, glutaric dialdehyde, succinic dialdehyde, ethanedial; glyoxyl trimer, paraformaldehyde, bis(dimethyl) acetal, bis(diethyl) acetal, polymeric dialdehydes, such as oxidized starch, and combinations of these and other similar compounds that should be well know to one of skill in the art.

The disclosed subject matter is also directed to a method of modifying the surface of a powdered solid material. In one such illustrative method the process includes: contacting the powdered solid material with a solution including a polyether amine; and reacting the polyether amine compound with a dialdehyde crosslinking agent. Also within the scope of the present disclosure are polymer coated solids for use in a well bore fluid. Such exemplary polymer coated solid materials may include: a powdered solid material and a polymer coating on the surface of the solid material, in which the polymer is the reaction product of a polyether amine and a dialdehyde crosslinking agent.

Additional details and information regarding the disclosed subject matter can be found in the following description.

### DETAILED DESCRIPTION

The present disclosure is generally directed to the oilfield use of the polymer compounds formed in the reaction between a polyether amine compound and a dialdehyde crosslinking agent. The resulting polymer is a solid insoluble material in aqueous fluids having a pH value greater than 7 (i.e. basic or alkaline conditions). However, the resulting polymer is soluble in aqueous fluids having a pH value less than 7 (i.e. acidic conditions). The value of the ability to solubilize the polymeric materials based on a change in pH should be readily apparent to one of skill in the art. For example, it is typical for a drilling fluid used in the drilling of subterranean wells to be maintained under mildly alkaline conditions. Thus, the polymers of the present invention could be formed downhole in a well bore under the alkaline conditions typical of such situations. However, the polymeric material could be dissolved and thus removed from the wellbore upon circulation of an acidic wash fluid, as is typical prior to bringing a subterranean well into production.

The polyether amine compounds useful in the disclosed subject matter should have one or more, and preferably two or more, amine groups that will react with the dialdehyde crosslinking agents described below to form polymeric materials. In one illustrative embodiment, a poly(alkylene oxide) diamine is utilized in which the poly(alkylene oxide) chains are terminated on one end or on both ends with amine groups. Many of these compounds are commercially available from Huntsman Chemicals under the trade name JEFFAMINE. It is preferable that alkylene oxide group be derived from propylene oxide, however, groups utilizing ethylene oxide, butylenes oxide or mixtures of the three may be used in random or block copolymer forms. One such group of compounds have the generalized formula: 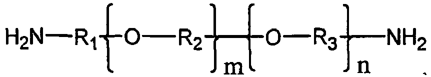 in which R1, R2 and R3 are independently selectable C2 to C4 carbon containing branched or straight chain aliphatic groups, and m+n has a value in the range from about 1 to about 50. It should be kept in mind that as the value of x increases, the more oleophillic the material becomes. Compounds within this formula range have a molecular weight from about 78 AMU to about 3700, however, compounds having a molecular weight in the 100 to 2000 AMU range are preferred.

Examples of suitable commercially available compounds include diamine compounds having the general formula: 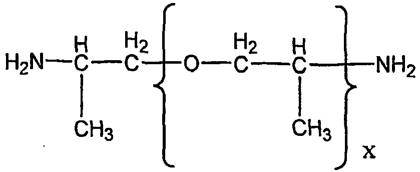 in which x can have a value from about 1 to about 50 or more. Preferably the value of x is from 2 to about 10 and more preferably between 2 and 6.

Polyether amine compounds that have more than two reactive amine groups may also be utilized. One such preferred tri-amine compounds has the formula: 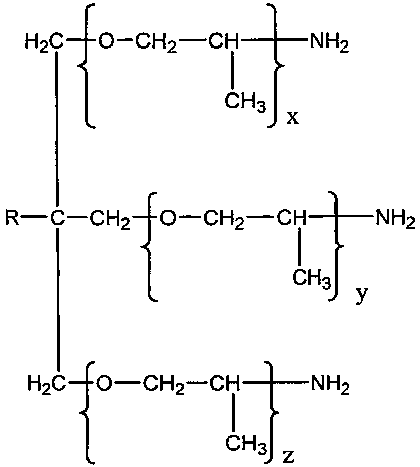 in which R may be a H or C1 to C6 carbon group, preferably a C2 alkyl group, and x+y+z has a value from 3 to about 25 and preferably a value from about 3 to about 6.

In addition, partially reacted amine compounds may be utilized. For example partially linked compounds such as: 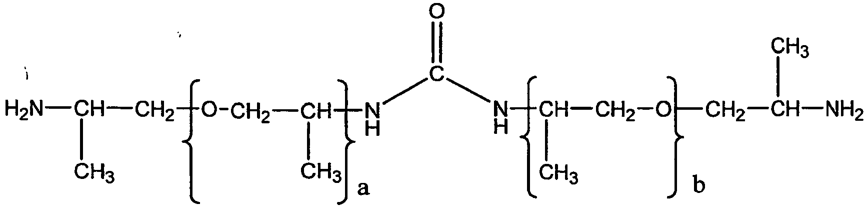 in which a +b is a number greater than 2 and preferably in the range of about 5 to about 15 and more preferably between about 9 and about 10.

The above disclosed polyether amine compounds are reacted with dialdehyde based cross-linking agents to form the polymeric compounds utilized in the disclosed subject matter. A variety of dialdehyde based cross-linking agents will be of use including: formaldehyde, glutaric dialdehyde, succinic dialdehyde, or glyoxal; as well as compounds that form such agents such as glyoxyl trimer and paraformaldehyde, bis(dimethyl) acetal, bis(diethyl) acetal, polymeric dialdehydes, such as oxidized starch,. Preferably the cross-linking agent is a low molecular weight, difunctional aldehyde, such as 1,2-ethandione, which is also known as ethanedial and glyoxal. Glyoxal is most widely used as a cross-linker in the production of permanent press resins for textiles, it has also found application in the production of moisture resistant glues and adhesives as well as moisture resistant foundry binders. Glyoxal is also used as a dispersant and solubilizer for water soluble polymers such as carboxy methylcellulose and cellulose ethers. Glyoxal has found applications in soil stabilizers and grouting systems and adding compressive strength to cement. For example, glyoxal has been used in combination various water soluble polymers such as HEC, chitosan, gelatin as viscosifying agents in cementing fluids. It is also contemplated that compounds that for glyoxyl upon heating will be useful, for example glyoxyl trimer which forms glyoxyl upon heating.

One of skill in the art should appreciate that the molar equivalent ratio of the polyether amine compound and the dialdehyde cross-linking agent (hereafter referred to as the PA:DA ratio) will affect the extent of the crosslinking achieved between the polyether amine compound and the dialdehyde cross-linking agent. Such a skilled person will appreciate that in a stoichiometrically balanced equation, two amine molar equivalents are coupled together by one dialdehyde molar equivalent. Through routine variation of the PA:DA molar equivalent ratio, one of skill in the art should be easily able to determine the proper molar equivalent ratio to obtain a desired viscosity. A skilled person in the art should appreciate that a minimally crosslinked polymer with high fluidity (i.e. low viscosity) will be achieved using a high PA:DA molar equivalent ratio. For example a PA:DA ratio greater than 50:1 forms a polymer with minimal cross-linking and thus very minimal change in viscosity from the non-crosslinked polyether amine. On the other hand, a very low PA:DA ratio, for example 10:1 should provide a high level of cross-linking and thus a more viscous fluid. As the ideal PA:DA molar ratio (i.e. 2:1) is achieved the fluids very viscous and many become solid like materials.

In addition to the imine forming reactions described above, it is speculated that other chemical reactions may be taking place to help form the reaction product / polymer. For example, it is possible that the formation of hemiacetal bonds occurs between carbonyl groups that in turn help produce a three dimensional, insoluble, cross-linked material. The reasons for this speculation is that the reaction of purely di-functional monomers would be expected to produce polymers with a significant linear structure. One of skill in the art should appreciate that such polymer molecules would be more soluble than the polymeric materials formed in the disclosed reactions.

Regardless of the actual molecular theory that best describes the formation of the disclosed materials, the reaction between the polyether amine compounds and the dialdehyde compounds disclosed herein may be carried out in a variety of ways. In one embodiment of the disclosed subject matter, the monomers may be simply mixed together to form a polymeric material. That is to say solvents or carrier fluids to dissolve or suspend the reaction are not required, but may be desirable to assist in easier handling and processing of the polymer. It has been observed that in some cases it is possible to cross-link the polyether amine from dilute solutions to produce a solid / gel like polymeric material. It has also been observed that the speed of reaction can be controlled by varying the pH of the polyether amine solution. The following two reactions serve as illustrative examples:
Reaction A: 1 ml of poly(propylene oxide) diamine, commercially available as Jeffamine D230 from Huntsman Chemicals (pH ∼12) was mixed with 1ml of 40% ethanedial solution. Rapid polymerization was observed to form in stages, a waxy type material with an approximate pH of 8. After 10 minutes, the material was solid and hard.
Reaction B: 1 ml of poly(propylene oxide) diamine, commercially available as Jeffamine D230 from Huntsman Chemicals (pH adjusted to 9.5 with hydrochloric acid) was reacted with 1 ml of a 40% ethanedial solution. The resulting mixture had a pH of 5.9. After 7 minutes the mixture has formed a viscous, gel like fluid. After 11 minutes, a semisolid had formed. After 82 minutes a hard solid like material had formed.

One of skill in the art will understand and appreciate that other factors, such as temperature, may have a significant impact upon the speed of the reaction. Though systematic experimentation, one of skill in the art will be able to determine the ideal conditions to achieve a predetermined result, be it a gel like fluid or a solid waxy like material or a solid hard material. it should also be appreciated that for oil field applications, it is possible to optimize the reaction conditions, such as pH, concentration of reactants, temperature, etc... to produce a polymer with a definable set time. Use of such information will enable the downhole placement of the fluids disclosed herein a predetermined location in the well prior to becoming a solid like material.

The reaction of the polyether amine compounds and the dialdehyde crosslinking agent may be carried out using a suspension polymerization technique. In suspension polymerization, the polymer is prepared in a carrier fluid. Typically the monomers are in soluble in the carrier fluid and are stabilized in the carrier fluid before and ruing the polymerization by the use of surfactants. The following example illustrates this method of forming the polymers disclosed herein.

A polyether amine / dialdehyde based suspension polymer was prepared as follows: about 45 g of mineral oil carrier fluid (Escaid 110) was weighed into a 100 ml beaker and placed on low speed mixer at about 600 rpm. About 1 ml of surfactant suspending agent (Crill 4) was added and the mixture allowed to mix for about 1 minute. Approximately 3 ml of a 40% ethanedial in water solution was added and allowed to disperse for about 5 minutes. To this mixture 10 ml of poly(propylene oxide) diamine, commercially available as Jeffamine D2000 from Huntsman Chemicals, was added drop wise over the course of about 2 hours. The reaction was then filtered and the resulting solid material was washed with carrier fluid and then air dried for 48 hours. The resulting solid comprised of soft elastic beads after air drying.

One of skill in the art upon consideration of the above should appreciate the ease by which these polymeric materials can be made. It is envisioned that these beads could be used as a product in their own right as loss circulation or bridging materials, a slow release biocide, or a lubricating bead. These beads have the added advantage that they are degraded under mildly acidic conditions. One of skill in the art should appreciate that this means the beads will be removable, if required, from flow paths connecting the well bore to the production zone of a penetrated formation. Thus it is envisioned that these beads will not inhibit or restrict the production of fluids from the formation. Alternatively, it can be conceived that the suspension polymerization technique could be used at the well site to produce slurries of polymer beads. Such on sight produced polymer beads could be used for loss circulation, water shut off treatment or other uses in subterranean wells.

One of skill in the art should appreciate that the polyether amine compounds of the disclosed above have been utilized in drilling fluids as shale inhibition agents. Examples of such use can be found in the following patents and published applications: US 6247543; US 6484821; US 6609578; US 6857485 and US2003/0148892. It will be further appreciated that well bores drilled with fluids containing these shale inhibition agents, at least partially penetrate the subterranean formation being drilled as well as forming a filter cake on the wall of the well bore. Both the fluid that may partially penetrate the formation and the filter cake include the polyether amine compounds disclosed above. Thus it is contemplated that the introduction of a source of dialdehyde into the downhole environment will result in the rapid polymerization of polyether amine compounds already present.

In one such illustrative method, the wellbore is drilled using a drilling fluid that includes a polyether amine compound as a shale inhibition agent. The circulation of the drilling fluid would be stopped and a weighted pill of spacer fluid would then be at least partially circulated into the drill string to form a wash/spacer fluid. This would allow the introduction of a weighted pill containing a dialdehyde source into the drill string. A second spacer fluid follows the dialdehyde pill and the entire series of fluids circulated downhole.

One of skill in the art should appreciate that the dialdehyde fluid can be placed and any location along the well bore and provided sufficient time to react and polymerize with the polyether amines present in the formation and or filter cake. Thus it is envisioned that the polymer compounds of the present invention could be generated in situ the well for purposes such as sand consolidation, fluid loss control, bore hole stabilization. The utilization of the heat activated glyoxal trimer will add a further dimension and control over the down hole polymerization reaction.

As noted above, the polymer compounds of the disclosed subject matter are especially suitable for use down hole because they can be engineered to form strong solid like compounds under mildly alkaline conditions typically found in drilling fluids and muds. One of skill in the art should appreciate that this will allow the downhole formation of wellbore with enhanced stability and if desired will likely lead to a chemical well bore casing. As previously noted, the polymers of the present invention are easily solubilized upon exposure to mild acid. Thus it is envisioned that a simple acid wash would rapidly remove the formed polymer allowing the easy removal via circulation of the fluids. One of skill in the art should easily appreciate that the ability to form a chemical well bore casing using in expensive commercially available compounds is of considerable value to the industry. The fact that the chemical well bore casing will be easily removed with a mild acid wash will only be a further enhancement.

The disclosed subject matter also encompasses the modification of surface properties of solid materials with the polymers of the present invention. Specifically one such illustrative embodiment includes, a method of modifying the surface of a powdered solid material, preferably solid mineral materials or weighting materials utilized in drilling and other wellbore fluids. The illustrative method includes: contacting the powdered solid material with a solution including a polyether amine and then reacting the polyether amine compound with a dialdehyde crosslinking agent. The polyether amine compounds and the dialdehyde crosslinking agent utilized in this method are those disclosed above. The powdered solid material utilized in one embodiment may be a weighting or bridging agent typically utilized in wellbore fluids examples of which include barite, hematite, calcite, calcium carbonate, and mixtures of these and similar materials that should be well know to one of skill in the art.

To better illustrate the above method of coating powdered solid materials with the polymers disclosed herein, the following example is provided:
130g of Barite was placed in 224g of mineral oil (Escaid 110) along with 3 ml of polyether amine (Jeffamine) and mixed on a Silverson high shear mixer, fitted with an emulsifying screen at 6000 rpm, in a water bath to control the temperature. As indicated in the table below a predetermined amount of 40% Glyoxal (ethanedial) solution was added to the mixture drop wise.

### Quantities Used for Preparing Samples of Modified Barite Based on polyether amine (Jeff amine) and ethanedial (Glyoxal)

| 3g Jeffamine | 40% Glyoxal added | Observation |
|---|---|---|
| D400 | 1ml | |
| T403 | 1ml | |
| D2000 | 0.5ml | |
| T5000 | 0.5ml | Hard to air dry, still quite sticky after 64hrs |

The addition was continued until the barite started to flocculate. The slurry was filtered using a Buchner funnel and the barite collected on a Whatman 541 filter paper. The resulting powdered solid material was then air dried in the fume hood for 64hrs.

The above powdered solid material were utilized to prepare illustrative wellbore fluids to test their properties. The illustrative fluids were prepared by mixing 100g of the powdered solid material (i.e. the polymer coated barite) with 200g of the mineral oil containing 4g of organophilic clay viscosifier, then adding 30ml of 20% calcium chloride brine. If the preparation of these fluids was successful then these fluids were then hot rolled at 121°C for 16 hours and then their rheological and electrical stability properties were measured. Exemplary data is given in the following table.

### Fluid Properties of Samples Prepared with Modified Barite Samples After Dynamic Aging at 121°C for 16hrs.

| Modified Barite Sample | PV | YP | 6rpm | 3rpm | 10s/ 10m Gel | ES | Observations |
|---|---|---|---|---|---|---|---|
| Control Barite (No coating) | Preparation of fluid before aging was unsuccessful, on addition of the brine barite becomes water wet | | | | | | |
| D400 | 5 | 39 | 40 | 40 | 32/- | 693 | Some sag but stirs back okay |
| T403 | 9 | 16 | 19 | 19 | 12/- | 1034 | Some sag but stirs back okay |
| D2000 | 10 | 13 | 11 | 11 | 13/19 | 316 | Some sag, but barite still oil wet |
| T5000 | 9 | 7 | 6 | 6 | 7/- | 398 | Some sag, but barite still oil wet |

| | | | | | | | |
|---|---|---|---|---|---|---|---|
| Note: Rheological properties tested at 50°C on a Fann 35 Rheometer | | | | | | | |

Upon review one of skill in the art should appreciate that the results show that by placing a coating of the polyether amine / dialdehyde based polymers on the barite it is possible to convert it from a water loving, hydrophilic, surface to an oleophilic one. This is demonstrated by the fact that it was not possible to prepare a fluid with uncoated barite. As soon as approximately 10ml of brine was added to the uncoated barite oil slurry the barite became water wet and agglomerated. In contrast the coated barite samples were all able to produce stable fluids containing, uniformly dispersed, oil wet barite. These fluids were sufficiently stable that they could be dynamically aged at 121°C. The results, after aging, show that the coated barite particles emulsify the brine in the fluid to form a solids stabilized or "Pickering" emulsion. This is signified by the relatively high electrical stability values, which are the voltages required to break the emulsion. Taking into consideration that there are no other surface active agents in the fluid to perform this function, one of skill in the art should appreciate that the surface of the barite has been modified by a layer of the polymer to allow the barite particles to behave in this way. After aging the rheological properties of the fluids also indicate that the barite is still uniformly dispersed in the fluid.

In addition to the general observation that the coated barite samples produce stable fluids one of skill in the art should understand that type of polyether amine used in the polymer coating on the barite has an affect on the fluid properties. Further it should be appreciated that the fluids prepared from the modified barites made with the lower molecular weight polyether amines (e.g. Jeffamine D400 and Jeffamine T403), give higher electrical stability readings and rheological values compared to the fluids made with the higher molecular weight polyether amines (e.g. Jeffamine D2000 and Jeffamine T5000) modified barites.

In view of the above disclosure, one of skill in the art should understand and appreciate that one illustrative embodiment of the disclosed subject matter includes a method of controlling the loss of a drilling fluid from a well bore into a subterranean formation. The illustrative method includes: drilling the well bore with an aqueous based drilling fluid which has an aqueous phase and a shale hydration inhibitor, preferably a polyether amine compound, and circulating into the well bore a fluid pill that includes a dialdehyde crosslinking agent. In one illustrative embodiment, the polyether amine has the formula: 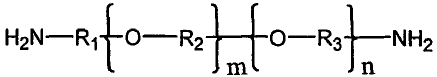 in which R₁, R₂ and R₃ are independently selectable C₂ to C₄ carbon containing branched or straight chain aliphatic groups, and m+n has a value in the range from about 1 to about 50. Alternatively, the polyether amine may or may not be selected from the group consisting of: a) compounds having the general formula: 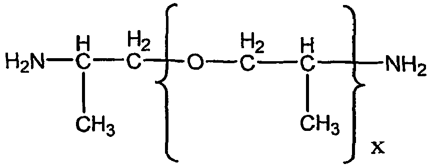 in which x has a value from about 1 to about 50; b) compounds having the general formula: 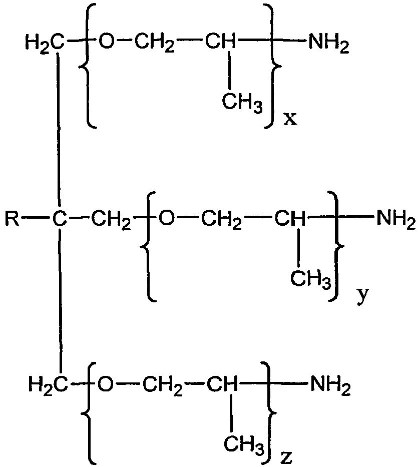 in which R may be a H or C 1 to C6 carbon group, and x+y+z has a value from 3 to about 25; and c) compounds having the general formula: 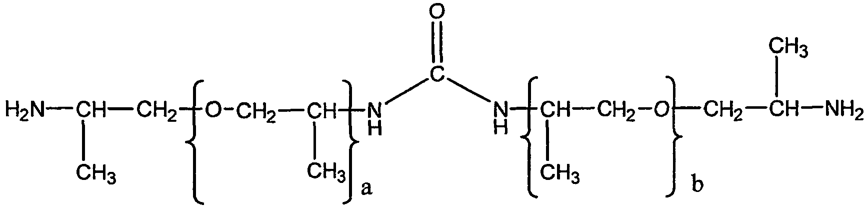 in which a +b is a number greater than 2; and combinations of these and other similar compounds that should be well know to one of skill in the art..

The dialdehyde crosslinking agent may or may not be selected from the group consisting of formaldehyde, glutaric dialdehyde, succinic dialdehyde, ethanedial; glyoxyl trimer, paraformaldehyde, bis(dimethyl) acetal, bis(diethyl) acetal, polymeric dialdehydes, such as oxidized starch, and combinations of these and other similar compounds that should be well know to one of skill in the art.

One optional and illustrative embodiment of the claimed method the step of circulating into the well bore a fluid pill including a dialdehyde crosslinking agent is expanded to involve the formation of a fluid sequence or train. In one such embedment, a spacer fluid is introduced into the well bore and a portion of the drilling fluid is displaced by a first spacer fluid. The method continues by introducing the fluid pill into the well bore after the first spacer fluid; and then displacing a further portion of the drilling fluid. A second spacer fluid is introduced into the well bore after the fluid pill; and circulation of the first spacer fluid, the fluid pill and the second spacer fluid to a predetermined position within the well bore takes place.

Optionally the fluid pill may or may not include a weighting agent to increase the density of the fluid loss control pill. One of skill in the art should appreciate that a wide variety of weighting agents may be utilized. In one illustrative embodiment the weighting agent is selected from the group consisting of: aqueous brine solutions of inorganic salts, barite, hematite, calcite, calcium carbonate, and combinations of these and other similar compounds that should be well know to one of skill in the art.

The disclosed subject matter is also directed to a fluid loss control pill formulated to include an aqueous phase, a polyether amine and a dialdehyde crosslinking agent. In one illustrative embodiment, the polyether amine and the dialdehyde crosslinking agents are in two separate phases or fluid components. Thus an illustrative embodiment may or may not include a first portion of the aqueous phase contains the polyether amine compound and a second portion of the aqueous phase contains the dialdehyde crosslinking agent. In such an illustrative embodiment, it may or may not be desirable that the first portion of the aqueous phase is separated from the second portion of the aqueous phase by a third portion of the aqueous phase which functions as a spacer fluid. Alternatively, the polyether amine or the dialdehyde crosslinking agent, preferably the dialdehyde crosslinking agent, may be temporarily rendered non-reactive. This may be achieved by encapsulation or by the selection of a temperature dependent source or other chemically or physically controllable source of the reactive compound. For example a temperature dependent source of the reactive dialdehyde may be glyoxyl trimer or paraformaldehyde, bis(dimethyl) acetal, bis(diethyl) acetal, polymeric dialdehydes, such as oxidized starch, and combinations of these and similar compounds.

The illustrative fluid loss control pill may or may not utilize a polyether amine having the formula: 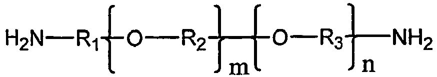 in which R₁, R₂ and R₃ are independently selectable C₂ to C₄ carbon containing branched or straight chain aliphatic groups, and m+n has a value in the range from about 1 to about 50. crosslinking agent. In one illustrative embodiment, the polyether amine has the formula: 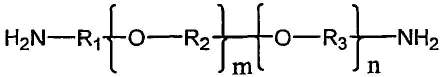 in which R₁, R₂ and R₃ are independently selectable C₂ to C₄ carbon containing branched or straight chain aliphatic groups, and m+n has a value in the range from about 1 to about 50. Alternatively, the polyether amine may or may not be selected from the group consisting of: a) compounds having the general formula: 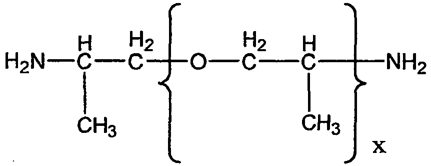 in which x has a value from about 1 to about 50; b) compounds having the general formula: 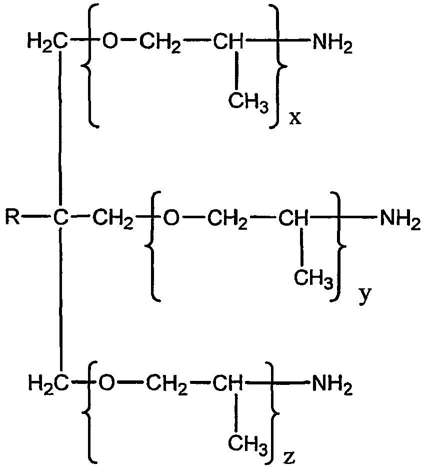 in which R may be a H or C1 to C6 carbon group, and x+y+z has a value from 3 to about 25; and c) compounds having the general formula: 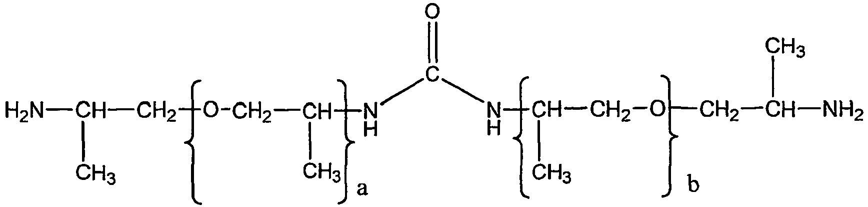 in which a +b is a number greater than 2; and combinations of these and other similar compounds that should be well know to one of skill in the art..

The dialdehyde crosslinking agent utilized in the illustrative fluid loss control pill may or may not be selected from the group consisting of formaldehyde, glutaric dialdehyde, succinic dialdehyde, ethanedial; glyoxyl trimer, paraformaldehyde, bis(dimethyl) acetal, bis(diethyl) acetal, polymeric dialdehydes, such as oxidized starch, and combinations of these and other similar compounds that should be well know to one of skill in the art.

Other components that may or may not be included in the fluid loss control fluid include weighting agents, viscosifying agents, and other common well bore fluid components that should be well known to one of skill in the art. In one such illustrative embodiment, the fluid loss control pill includes a weighting agent to increase the density of the fluid loss control pill. Illustrative examples of such weighting agents include: aqueous brine solutions of inorganic salts, barite, hematite, calcite, calcium carbonate, and combinations of these and other similar compounds that should be well know to one of skill in the art.

Given the scope of the present disclosure, one of skill in the art should appreciate that a method of stabilizing the well bore of a well penetrating a subterranean formation is within the scope of the disclosed subject matter. One such illustrative method includes: drilling the well bore with an aqueous based drilling fluid formulated to include an aqueous phase and a shale hydration inhibitor which is preferably a polyether amine compound, and circulating into the well bore a stabilization fluid including a dialdehyde crosslinking agent.

The polyether amine compound utilized in this illustrative embodiment may or may not have the formula: 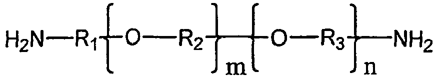 in which R₁, R₂ and R₃ are independently selectable C₂ to C₄ carbon containing branched or straight chain aliphatic groups, and m+n has a value in the range from about 1 to about 50. crosslinking agent. In one illustrative embodiment, the polyether amine has the formula: 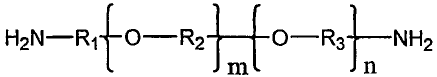 in which R₁, R₂ and R₃ are independently selectable C₂ to C₄ carbon containing branched or straight chain aliphatic groups, and m+n has a value in the range from about 1 to about 50. Alternatively, the polyether amine may or may not be selected from the group consisting of: a) compounds having the general formula: 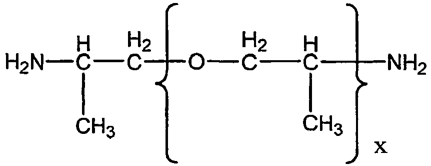 in which x has a value from about 1 to about 50; b) compounds having the general formula: 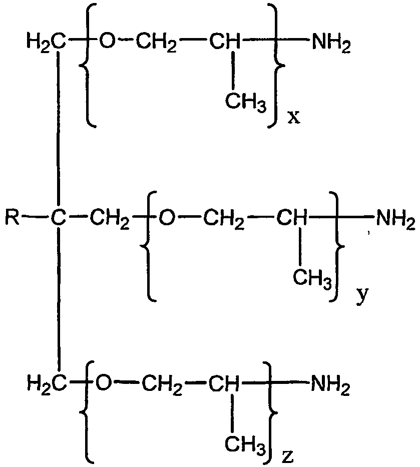 in which R may be a H or C1 to C6 carbon group, and x+y+z has a value from 3 to about 25; and c) compounds having the general formula: 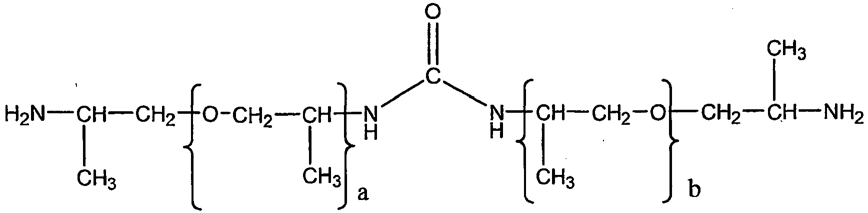 in which a +b is a number greater than 2; and combinations of these and other similar compounds that should be well know to one of skill in the art..

The illustrative method utilizes a stabilization fluid that includes dialdehyde crosslinking agent. In one embodiment, the dialdehyde crosslinking agent may or may not be selected from compounds including formaldehyde, glutaric dialdehyde, succinic dialdehyde, ethanedial; glyoxyl trimer, paraformaldehyde, bis(dimethyl) acetal, bis(diethyl) acetal, polymeric dialdehydes, such as oxidized starch, and combinations of these and other similar compounds that should be well know to one of skill in the art. In one preferred illustrative embodiment, the dialdehyde crosslinking agent is encapsulated so as to control reactivity with the polyether amine. Alternatively, the polyether amine or the dialdehyde crosslinking agent, preferably the dialdehyde crosslinking agent, may be rendered temporarily non-reactive. This may be achieved by the selection of a temperature dependent source or other chemically or physically controllable source of the reactive compound. For example a temperature dependent source of the reactive dialdehyde may be glyoxyl trimer or paraformaldehyde, bis(dimethyl) acetal, bis(diethyl) acetal, polymeric dialdehydes, such as oxidized starch, and combinations of these and similar compounds.

Other components that may or may not be included in the fluids utilized in the illustrative method include weighting agents, viscosifying agents, and other common well bore fluid components that should be well known to one of skill in the art. In one such illustrative embodiment, the fluid loss control pill includes a weighting agent to increase the density of the fluid loss control pill. Illustrative examples of such weighting agents include: aqueous brine solutions of inorganic salts, barite, hematite, calcite, calcium carbonate, and combinations of these and other similar compounds that should be well know to one of skill in the art.

In one preferred and illustrative embodiment of the claimed method additional steps may or may not be carried out. Such additional step may include: forming a filter cake on the walls of the well bore, wherein the filter cake includes the polyether amine compound; stopping the circulation of the stabilization fluid at a predetermined location along the well bore, and shutting in the well for a predetermined time period sufficient for the polyether amine in the filter cake to react with the dialdehyde crosslinking agent.

The disclosed subject matter further encompasses a fluid system for stabilizing the well bore of a well penetrating a subterranean formation. An illustrative and preferred embodiment of such a fluid system includes: a first fluid including an aqueous phase and a shale hydration inhibitor, in which the shale hydration inhibitor is a polyether amine compound, and a second fluid including a dialdehyde crosslinking agent. The combination of the first and the second fluids results in the formation of a polymer between the polyether amine compound and the dialdehyde crosslinking agent. Preferred and illustrative embodiments of the polyether amine and the dialdehyde crosslinking agent have been provided in detail above, thus further discourse is not necessary and should be well know to one of skill in the art.

In one illustrative embodiment, the polyether amine and the dialdehyde crosslinking agents are in two separate phases or fluid components. Thus an illustrative embodiment may or may not include a first portion of the aqueous phase contains the polyether amine compound and a second portion of the aqueous phase contains the dialdehyde crosslinking agent. In such an illustrative embodiment, it may or may not be desirable that the first portion of the aqueous phase is separated from the second portion of the aqueous phase by a third portion of the aqueous phase which functions as a spacer fluid. Alternatively, the polyether amine or the dialdehyde crosslinking agent, preferably the dialdehyde crosslinking agent, may be temporarily rendered non-reactive. This may be achieved by encapsulation or by the selection of a temperature dependent source or other chemically or physically controllable source of the reactive compound. For example a temperature dependent source of the reactive dialdehyde may be glyoxyl trimer or paraformaldehyde, bis(dimethyl) acetal, bis(diethyl) acetal, polymeric dialdehydes, such as oxidized starch, and combinations of these and similar compounds.

Other components that may or may not be included in the fluids include weighting agents, viscosifying agents, and other common well bore fluid components that should be well known to one of skill in the art. In one such illustrative embodiment, the fluid loss control pill includes a weighting agent to increase the density of the fluid loss control pill. Illustrative examples of such weighting agents include: aqueous brine solutions of inorganic salts, barite, hematite, calcite, calcium carbonate, and combinations of these and other similar compounds that should be well know to one of skill in the art.

It should also be appreciated that the disclosed subject matter may include an agent for the consolidation of a subterranean well bore, in which the agent is the reaction product of a polyether amine compound with a dialdehyde crosslinking agent. Preferred and illustrative embodiments of the polyether amine and the dialdehyde crosslinking agent have been provided in detail above and thus without further discourse should be well know to one of skill in the art.

Other components that may or may not be included in the formulation of the illustrative agent for the consolidation of a subterranean well bore. Examples of such optional components include weighting agents, viscosifying agents, and other common well bore fluid components that should be well known to one of skill in the art. In one such illustrative embodiment, the fluid loss control pill includes a weighting agent to increase the density of the fluid loss control pill. Illustrative examples of such weighting agents include: aqueous brine solutions of inorganic salts, barite, hematite, calcite, calcium carbonate, and combinations of these and other similar compounds that should be well known to one of skill in the art.

Another aspect of the present disclosure that should be appreciated by one of skill in the art is a method of modifying the surface of a powdered solid material. In one such illustrative method the process includes: contacting the powdered solid material with a solution including a polyether amine; and reacting the polyether amine compound with a dialdehyde crosslinking agent. Also within the scope of the present disclosure are polymer coated solids for use in a well bore fluid. Such exemplary polymer coated solid materials may include: a powdered solid material and a polymer coating on the surface of the solid material, in which the polymer is the reaction product of a polyether amine and a dialdehyde crosslinking agent. Further well bore fluids containing such polymer coated solids are contemplated as being within the present disclosure. One such illustrative fluid includes a fluid phase and a solid phase including a powdered solid material coated with a polymer which is the reaction product of a polyether amine and a dialdehyde crosslinking agent. The fluid phase may or may not be selected from an aqueous fluid, an oleaginous fluid as well as combinations of these and other similar compounds that should be well know to one of skill in the art.

Preferred and illustrative embodiments of the polyether amine and the dialdehyde crosslinking agent utilized in the noted illustrative embodiments have been provided in detail above. Thus such compounds should be well known to one of skill in the art.

In each of the above embodiments, the solid materials are preferably materials that are well known as being weighting and bridging agents ins drilling and well bore fluids. Illustrative examples of such solid materials include: aqueous brine solutions of inorganic salts, barite, hematite, calcite, calcium carbonate, and combinations of these and other similar compounds that should be well know to one of skill in the art.

While the methods, compositions and apparatus disclosed above have been described in terms of preferred or illustrative embodiments, it will be apparent to those of skill in the art that variations may be applied to the process described herein without departing from the concept and scope of the claimed subject matter. All such similar substitutes and modifications apparent to those skilled in the art are deemed to be within the scope and concept of the subject matter as it is set out in the following claims.

## Claims

1. A wellbore fluid having at least two phases, the wellbore fluid comprising
a fluid phase
a solid phase including a powdered solid material coated with a polymer, wherein the polymer is the reaction product of a polyether amine and a dialdehyde crosslinking agent.

2. The well bore fluid of claim 1, wherein the polyether amine has the formula: 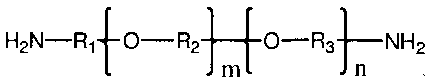 in which R1, R2 and R3 are independently selectable C2 to C4 carbon containing branched or straight chain aliphatic groups, and m+n has a value in the range from about 1 to about 50.

3. The well bore fluid of claim 1, wherein the polyether amine is selected from the group consisting of:
a) compounds having the general formula: 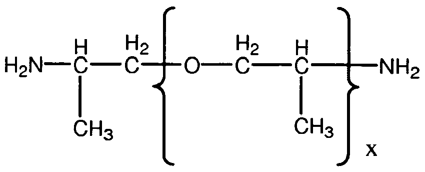 in which x has a value from about 1 to about 50;
b) compounds having the general formula: 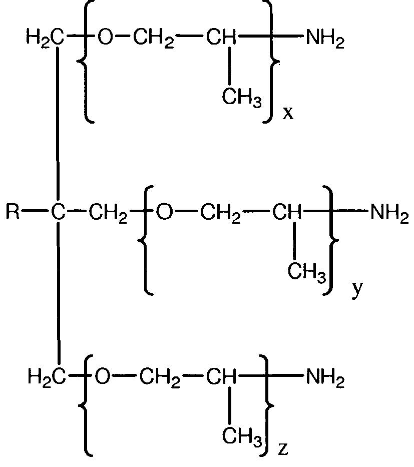 in which R may be a H or Cl to C6 carbon group, and x+y+z has a value from 3 to about 25; and
c) compounds having the general formula: 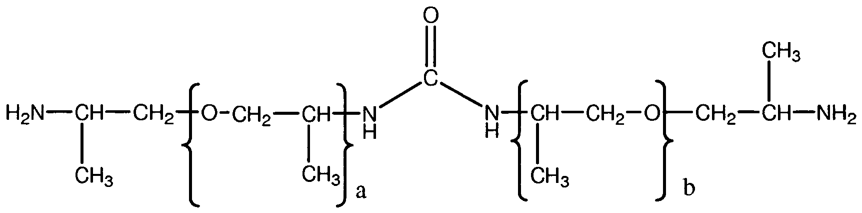 in which a +b is a number greater than 2; and
combinations and mixtures thereof.

4. The well bore fluid of claim 1, wherein the dialdehyde crosslinking agent selected from the group consisting of: formaldehyde, glutaric dialdehyde, succinic dialdehyde, ethanedial; glyoxyl trimer, paraformaldehyde, bis(dimethyl) acetal, bis(diethyl) acetal, oxidized starch, and combinations and mixtures thereof.

5. The well bore fluid of claim 1, wherein the powdered solid material is selected from the group consisting of barite, hematite, calcite, calcium carbonate, and mixtures thereof.

6. The wellbore fluid of claim 1, wherein the fluid phase is selected from the group consisting of: an aqueous fluid, an oleaginous fluid and mixtures thereof.

7. The wellbore fluid of claim 6 wherein the aqueous fluid is selected from the group consisting of: fresh water, sea water, brine, and combinations thereof.

8. The wellbore fluid of claim 6 wherein the oleaginous fluid is selected from the group consisting of: mineral oil, synthetic oil, paraffin, olefins, esters, and combinations thereof.

9. A method of modifying the surface of a powdered solid material for use in a wellbore fluid, the method comprising:
contacting the powdered solid material with a solution including a polyether amine
reacting the polyether amine compound with a dialdehyde crosslinking agent.

10. The method of claim 9, wherein the polyether amine has the formula: 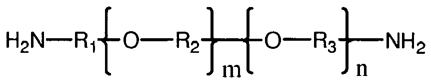 in which R1, R2 and R3 are independently selectable C2 to C4 carbon containing branched or straight chain aliphatic groups, and m+n has a value in the range from about 1 to about 50.

11. The method of claim 9, wherein the polyether amine is selected from the group consisting of:
a) compounds having the general formula: 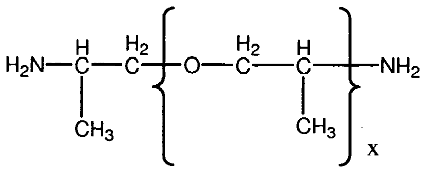 in which x has a value from about 1 to about 50;
b) compounds having the general formula: 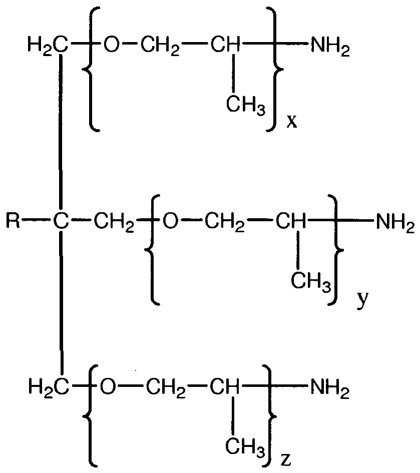 in which R may be a H or Cl to C6 carbon group, and x+y+z has a value from 3 to about 25; and
c) compounds having the general formula: 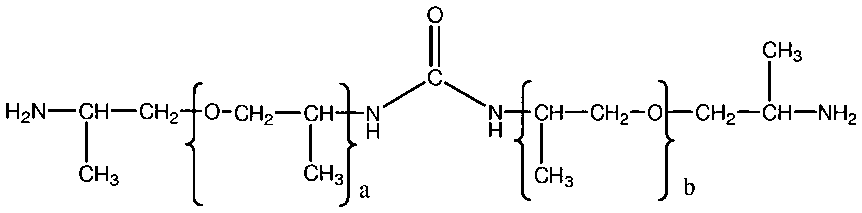 in which a +b is a number greater than 2; and
combinations and mixtures thereof.

12. The method of claim 9, wherein the dialdehyde crosslinking agent selected from the group consisting of: formaldehyde, glutaric dialdehyde, succinic dialdehyde, ethanedial; glyoxyl trimer, paraformaldehyde, bis(dimethyl) acetal, bis(diethyl) acetal, oxidized starch, and combinations and mixtures thereof.

13. The method of claim 9, wherein the powdered solid material is selected from the group consisting of barite, hematite, calcite, calcium carbonate, and mixtures thereof.

14. Polymer coated solids for use in a wellbore fluid comprising:
a powdered solid material
a polymer coating on the surface of the solid material, wherein the polymer is the reaction product of a polyether amine and a dialdehyde crosslinking agent.

15. The polymer coated solids of claim 14, wherein the polyether amine has the formula: 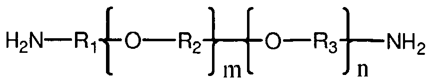 in which R1, R2 and R3 are independently selectable C2 to C4 carbon containing branched or straight chain aliphatic groups, and m+n has a value in the range from about 1 to about 50.

16. The polymer coated solids of claim 14, wherein the polyether amine is selected from the group consisting of:
a) compounds having the general formula: 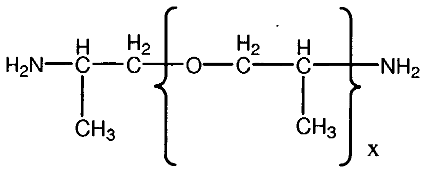 in which x has a value from about 1 to about 50;
b) compounds having the general formula: 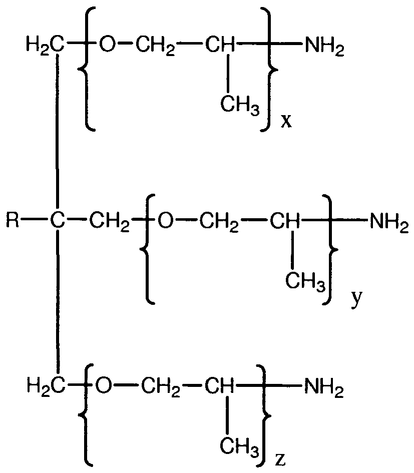 in which R may be a H or C1 to C6 carbon group, and x+y+z has a value from 3 to about 25; and
c) compounds having the general formula: 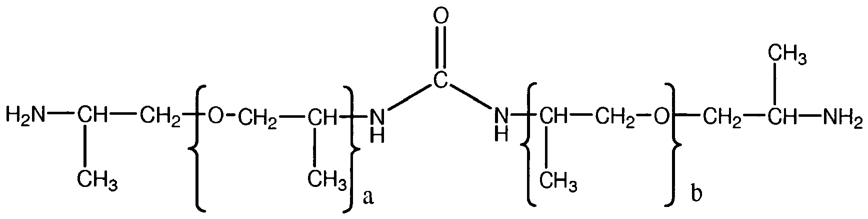 in which a +b is a number greater than 2; and
combinations and mixtures thereof.

17. The polymer coated solids of claim 14, wherein the dialdehyde crosslinking agent selected from the group consisting of: formaldehyde, glutaric dialdehyde, succinic dialdehyde, ethanedial; glyoxyl trimer, paraformaldehyde, bis(dimethyl) acetal, bis(diethyl) acetal, oxidized starch, and combinations and mixtures thereof.

18. The polymer coated solids of claim 14, wherein the powdered solid material is selected from the group consisting of barite, hematite, calcite, calcium carbonate, and mixtures thereof.

## Patentansprüche

1. Bohrspülung mit zumindest zwei Phasen, wobei die Bohrspülung Folgendes umfasst:
eine flüssige Phase,
eine feste Phase, die einen gepulverten Feststoff umfasst, der mit einem Polymer beschichtet ist, wobei das Polymer das Reaktionsprodukt eines Polyetheramins mit einem Dialdehydvernetzer ist.

2. Bohrspülung nach Anspruch 1, wobei das Polyetheramin die folgende Formel aufweist: 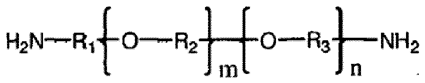 worin R1, R2 und R3 unabhängig voneinander aus unverzweigten oder verzweigten aliphatischen Gruppen mit 2 bis 4 Kohlenstoffen ausgewählt sind und m+n einen Wert im Bereich von etwa 1 bis etwa 50 aufweist.

3. Bohrspülung nach Anspruch 1, wobei das Polyetheramin aus folgender Gruppe ausgewählt ist:
a) Verbindungen der folgenden allgemeinen Formel: 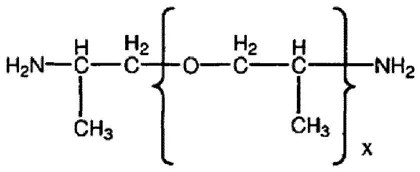 worin x einen Wert von etwa 1 bis etwa 50 aufweist;
b) Verbindungen der folgenden allgemeinen Formel: 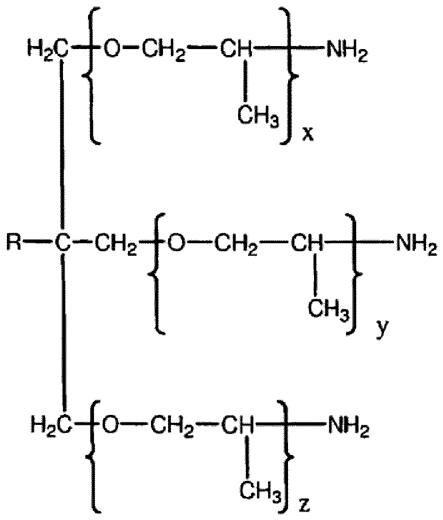 worin R H oder eine Gruppe 1 bis 6 Kohlenstoffen ist und x+y+z einen Wert von etwa 3 bis etwa 25 aufweist; und
c) Verbindungen der folgenden allgemeinen Formel: 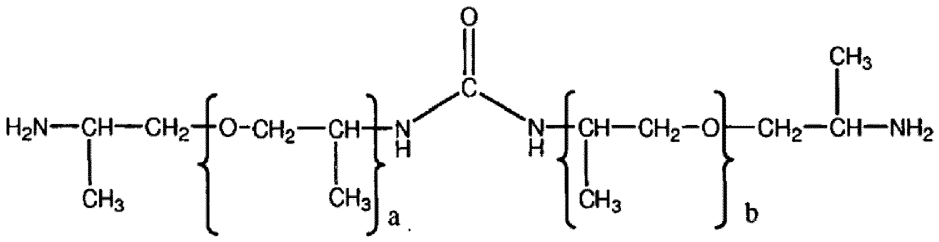 worin a+b eine Zahl größer als 2 ist; und
Kombinationen und Gemische davon.

4. Bohrspülung nach Anspruch 1, wobei der Dialdehydvernetzer aus folgender Gruppe ausgewählt ist: Formaldehyd, Glutarsäuredialdehyd, Bernsteinsäuredialde-hyd, Ethandial; Glyoxyltrimer, Paraformaldehyd, Bis(dimethyl)acetal, Bis(diethyl)-acetal, oxidierte Stärke und Kombinationen und Gemische davon.

5. Bohrspülung nach Anspruch 1, wobei der gepulverte Feststoff aus der aus Barit, Hematit, Calcit, Calciumcarbonat und Gemischen davon bestehenden Gruppe ausgewählt ist.

6. Bohrspülung nach Anspruch 1, wobei die flüssige Phase aus der aus einer wässrigen Flüssigkeit, einer öligen Flüssigkeit und Gemischen davon bestehenden Gruppe ausgewählt ist.

7. Bohrspülung nach Anspruch 6, wobei die wässrige Flüssigkeit aus der aus frischem Wasser, Meerwasser, Kochsalzlösung und Kombinationen davon bestehenden Gruppe ausgewählt ist.

8. Bohrspülung nach Anspruch 6, wobei die ölige Flüssigkeit aus der aus Mineralöl, synthetischem Öl, Paraffin, Olefinen, Estern und Kombinationen davon bestehenden Gruppe ausgewählt ist.

9. Verfahren zur Modifikation eines gepulverten Feststoffs zur Verwendung in einer Bohrspülung, wobei das Verfahren Folgendes umfasst:
Kontaktieren des gepulverten Feststoffs mit einer Lösung, die ein Polyetheramin enthält,
Umsetzen der Polyetheraminverbindung mit einem Dialdehydvernetzer.

10. Verfahren nach Anspruch 9, wobei das Polyetheramin die folgende Formel aufweist: 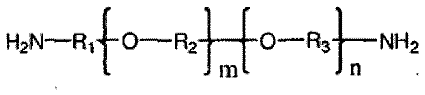 worin R1, R2 und R3 unabhängig voneinander aus unverzweigten oder verzweigten aliphatischen Gruppen mit 2 bis 4 Kohlenstoffen ausgewählt sind und m+n einen Wert im Bereich von etwa 1 bis etwa 50 aufweist.

11. Verfahren nach Anspruch 9, wobei das Polyetheramin aus folgender Gruppe ausgewählt ist:
a) Verbindungen der folgenden allgemeinen Formel: 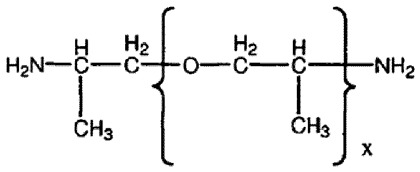 worin x einen Wert von etwa 1 bis etwa 50 aufweist;
b) Verbindungen der folgenden allgemeinen Formel: 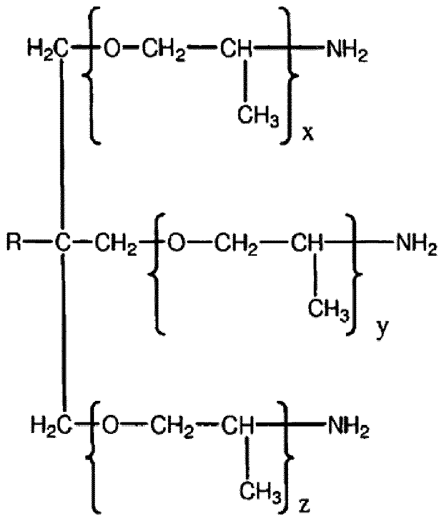 worin R H oder eine Gruppe mit 1 bis 6 Kohlenstoffen ist und x+y+z einen Wert von etwa 3 bis etwa 25 aufweist; und
c) Verbindungen der folgenden allgemeinen Formel: 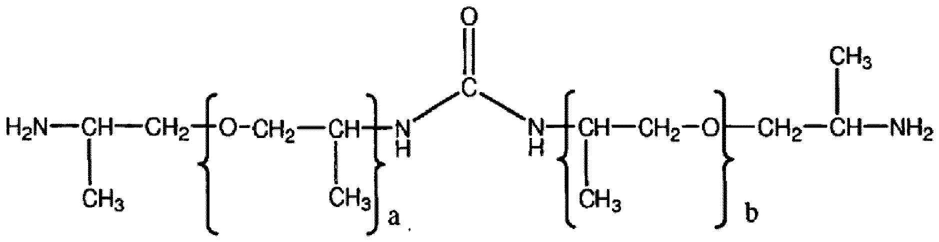 worin a+b eine Zahl größer als 2 ist; und
Kombinationen und Gemische davon.

12. Verfahren nach Anspruch 9, wobei der Dialdehydvernetzer aus folgender Gruppe ausgewählt ist: Formaldehyd, Glutarsäuredialdehyd, Bernsteinsäuredialdehyd, Ethandial; Glyoxyltrimer, Paraformaldehyd, Bis(dimethyl)acetal, Bis(diethyl)acetal, oxidierte Stärke und Kombinationen und Gemische davon.

13. Verfahren nach Anspruch 9, wobei der gepulverte Feststoff aus der aus Barit, Hematit, Calcit, Calciumcarbonat und Gemischen davon bestehenden Gruppe ausgewählt ist.

14. Polymerbeschichtete Feststoffe zur Verwendung in einer Bohrspülung, die Folgendes umfassen:
einen gepulverten Feststoff,
eine Polymerbeschichtung auf der Oberfläche des Feststoffs, wobei das Polymer das Reaktionsprodukt eines Polyetheramins mit einem Dialdehydvernetzer ist.

15. Polymerbeschichtete Feststoffe nach Anspruch 14, wobei das Polyetheramin die folgende Formel aufweist: 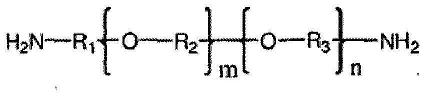 worin R1, R2 und R3 unabhängig voneinander aus unverzweigten oder verzweigten aliphatischen Gruppen mit 2 bis 4 Kohlenstoffen ausgewählt sind und m+n einen Wert im Bereich von etwa 1 bis etwa 50 aufweist.

16. Polymerbeschichtete Feststoffe nach Anspruch 14, wobei das Polyetheramin aus folgender Gruppe ausgewählt ist:
a) Verbindungen der folgenden allgemeinen Formel: 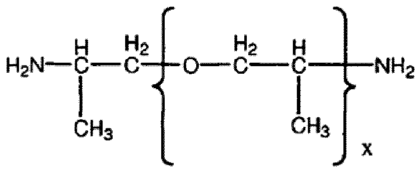 worin x einen Wert von etwa 1 bis etwa 50 aufweist;
b) Verbindungen der folgenden allgemeinen Formel: 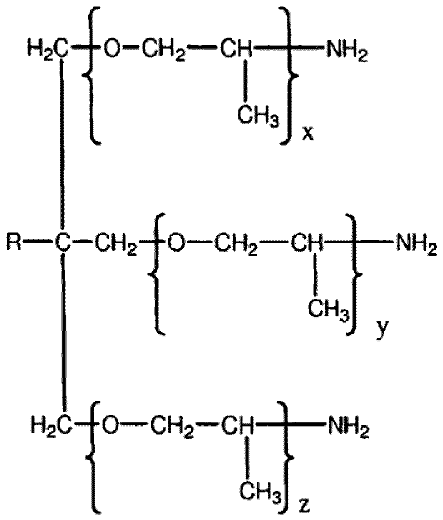 worin R H oder eine Gruppe mit 1 bis 6 Kohlenstoffen ist und x+y+z einen Wert von etwa 3 bis etwa 25 aufweist; und
c) Verbindungen der folgenden allgemeinen Formel: 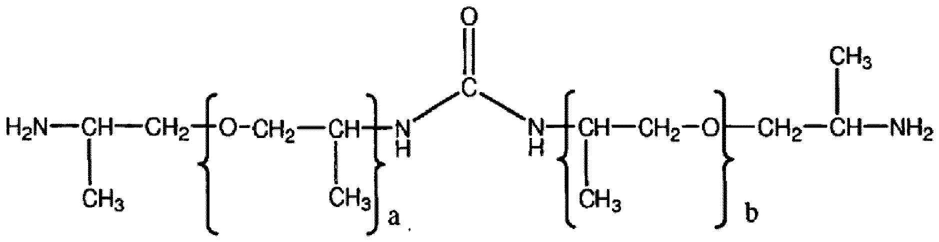 worin a+b eine Zahl größer als 2 ist; und
Kombinationen und Gemische davon.

17. Polymerbeschichtete Feststoffe nach Anspruch 14, wobei der Dialdehydvernetzer aus folgender Gruppe ausgewählt ist: Formaldehyd, Glutarsäuredialdehyd, Bernsteinsäuredialdehyd, Ethandial; Glyoxyltrimer, Paraformaldehyd, Bis(dimethyl)acetal, Bis(diethyl)acetal, oxidierte Stärke und Kombinationen und Gemische davon.

18. Polymerbeschichtete Feststoffe nach Anspruch 14, wobei der gepulverte Feststoff aus der aus Barit, Hematit, Calcit, Calciumcarbonat und Gemischen davon bestehenden Gruppe ausgewählt ist.

## Revendications

1. Fluide de forage de puits ayant au moins deux phases, le fluide de forage de puits comprenant
une phase fluide,
une phase solide contenant un matériau solide pulvérulent revêtu d'un polymère, le polymère étant le produit de la réaction d'une polyéther-amine et d'un agent de réticulation dialdéhyde.

2. Fluide de forage de puits selon la revendication 1, dans lequel la polyéther-amine répond à la formule : 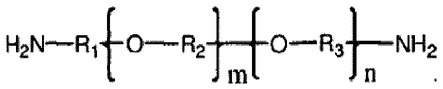 dans laquelle R₁, R₂ et R₃ sont des groupes aliphatiques à chaîne droite ou ramifiée contenant 2 à 4 carbones, pouvant être choisis indépendamment, et m+n a une valeur située dans la plage allant d'environ 1 à environ 50.

3. Fluide de forage de puits selon la revendication 1, dans lequel la polyéther-amine est choisie dans le groupe constitué par :
a) les composés de formule général : 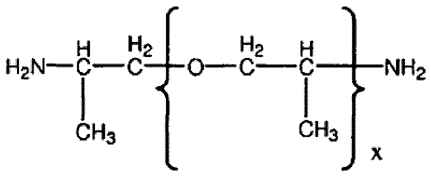 dans laquelle x a une valeur d'environ 1 à environ 50 ;
b) les composés de formule général : 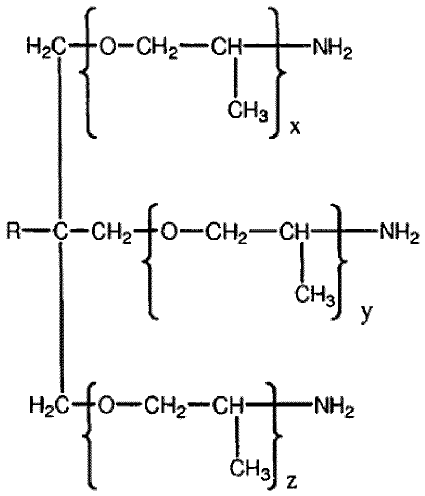 dans laquelle R peut être H ou un groupe contenant de 1 à 6 carbones, et x+y+z a une valeur de 3 à environ 25 ; et
c) les composés de formule général : 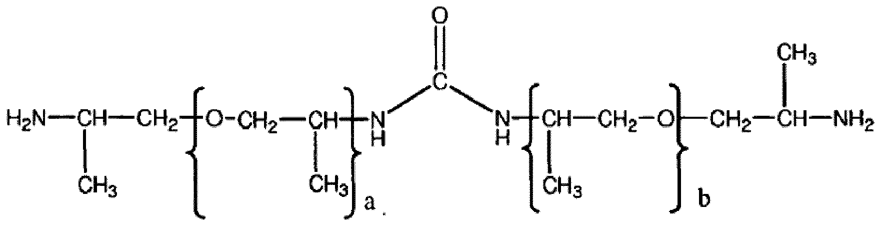 dans laquelle a+b est un nombre supérieur à 2 ; et
leurs combinaisons et mélanges.

4. Fluide de forage de puits selon la revendication 1, dans lequel l'agent de réticulation dialdéhyde est choisi dans le groupe constitué par : le formaldéhyde, le dialdéhyde glutarique, le dialdéhyde succinique, l'éthanedial ; un trimère de glyoxyle, le paraformaldéhyde, le bis(diméthyl)acétal, le bis(diéthyl)acétal, l'amidon oxydé, et leurs combinaisons et mélanges.

5. Fluide de forage de puits selon la revendication 1, dans lequel le matériau solide en poudre est choisi dans le groupe constitué par le sulfate de baryum, l'hématite, la calcite, le carbonate de calcium, et leurs mélanges.

6. Fluide de forage de puits selon la revendication 1, dans lequel la phase liquide est choisie dans le groupe constitué par : un fluide aqueux, un fluide huileux, et leurs mélanges.

7. Fluide de forage de puits selon la revendication 6, dans lequel le fluide aqueux est choisi dans le groupe constitué par : l'eau douce, l'eau de mer, la saumure, et leurs combinaisons.

8. Fluide de forage de puits selon la revendication 6, dans lequel le fluide huileux est choisi dans le groupe constitué par : l'huile minérale, l'huile synthétique, la paraffine, les oléfines, les esters, et leurs combinaisons.

9. Procédé pour modifier la surface d'un matériau solide pulvérulent pour utilisation dans un fluide de forage de puits, lequel procédé comprend :
la mise en contact du matériau solide pulvérulent avec une solution contenant une polyéther-amine,
la réaction du composé de polyéther-amine avec un agent de réticulation dialdéhyde.

10. Procédé selon la revendication 9, dans lequel la polyéther-amine répond à la formule : 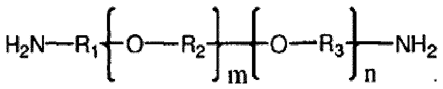 dans laquelle R₁, R₂ et R₃ sont des groupes aliphatiques à chaîne droite ou ramifiée contenant 2 à 4 carbones, pouvant être choisis indépendamment, et m+n a une valeur située dans la plage allant d'environ 1 à environ 50.

11. Procédé selon la revendication 9, dans lequel la polyéther-amine est choisie dans le groupe constitué par :
a) les composés de formule général : 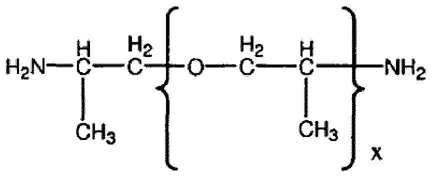 dans laquelle x a une valeur d'environ 1 à environ 50 ;
b) les composés de formule général : 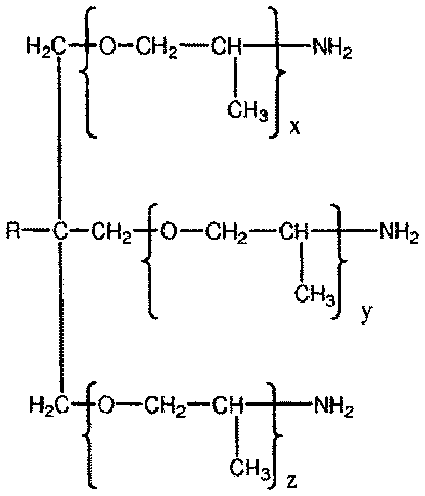 dans laquelle R peut être H ou un groupe contenant de 1 à 6 carbones, et x+y+z a une valeur de 3 à environ 25 ; et
c) les composés de formule général : 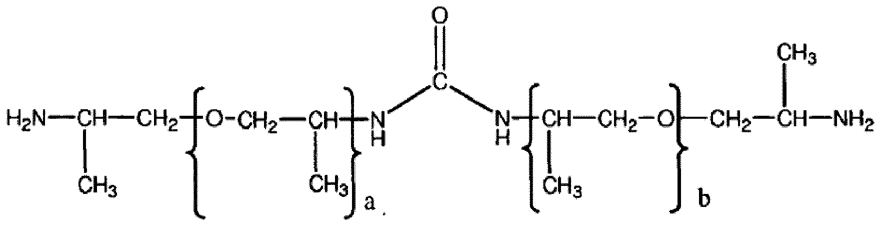 dans laquelle a+b est un nombre supérieur à 2 ; et leurs combinaisons et mélanges.

12. Procédé selon la revendication 9, dans lequel l'agent de réticulation dialdéhyde est choisi dans le groupe constitué par : le formaldéhyde, le dialdéhyde glutarique, le dialdéhyde succinique, l'éthanedial ; un trimère de glyoxyle, le paraformaldéhyde, le bis(diméthyl)acétal, le bis(diéthyl)acétal, l'amidon oxydé, et leurs combinaisons et mélanges.

13. Procédé selon la revendication 9, dans lequel le matériau solide en poudre est choisi dans le groupe constitué par le sulfate de baryum, l'hématite, la calcite, le carbonate de calcium, et leurs mélanges.

14. Solides revêtus de polymère pour utilisation dans un fluide de forage de puits comprenant :
un matériau solide pulvérulent,
un revêtement polymère sur la surface du matériau solide, le polymère étant le produit de la réaction d'une polyéther-amine et d'un agent de réticulation dialdéhyde.

15. Solides revêtus de polymère selon la revendication 14, dans lesquels la polyéther-amine répond à la formule : 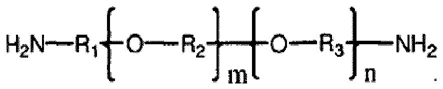 dans laquelle R₁, R₂ et R₃ sont des groupes aliphatiques à chaîne droite ou ramifiée contenant 2 à 4 carbones, pouvant être choisis indépendamment, et m+n a une valeur située dans la plage allant d'environ 1 à environ 50.

16. Solides revêtus de polymère selon la revendication 14, dans lesquels la polyéther-amine est choisie dans le groupe constitué par :
a) les composés de formule général : 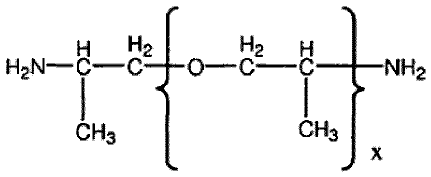 dans laquelle x a une valeur d'environ 1 à environ 50 ;
b) les composés de formule général : 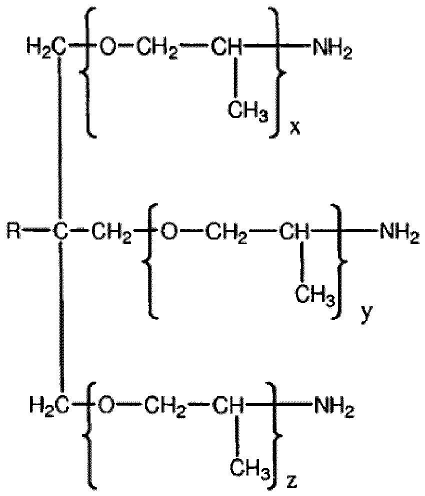 dans laquelle R peut être H ou un groupe contenant de 1 à 6 carbones, et x+y+z a une valeur de 3 à environ 25 ; et
c) les composés de formule général : 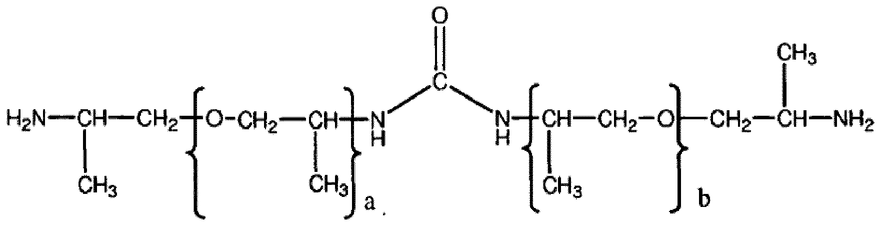 dans laquelle a+b est un nombre supérieur à 2 ; et
leurs combinaisons et mélanges.

17. Solides revêtus de polymère selon la revendication 14, dans lesquels l'agent de réticulation dialdéhyde est choisi dans le groupe constitué par : le formaldéhyde, le dialdéhyde glutarique, le dialdéhyde succinique, l'éthanedial ; un trimère de glyoxyle, le paraformaldéhyde, le bis(diméthyl)acétal, le bis(diéthyl)acétal, l'amidon oxydé, et leurs combinaisons et mélanges.

18. Solides revêtus de polymère selon la revendication 14, dans lesquels le matériau solide en poudre est choisi dans le groupe constitué par le sulfate de baryum, l'hématite, la calcite, le carbonate de calcium, et leurs mélanges.
